(19) Europäisches Patentamt
European Patent Office
Office européen des brevets

(11) **EP 2 796 600 B1**

(12) # EUROPEAN PATENT SPECIFICATION

(45) Date of publication and mention
of the grant of the patent:
**22.05.2019 Bulletin 2019/21**

(51) Int Cl.:
*D03D 15/00* (2006.01)     *D03D 1/02* (2006.01)
*D06M 15/643* (2006.01)     *D06M 15/564* (2006.01)
*B60R 21/16* (2006.01)     *D06N 3/12* (2006.01)
*D06N 3/14* (2006.01)     *D06N 3/00* (2006.01)
*B60R 21/235* (2006.01)     *B60R 21/36* (2011.01)
*D06M 15/693* (2006.01)     *D06N 3/10* (2006.01)

(21) Application number: **12858851.4**

(22) Date of filing: **21.12.2012**

(86) International application number:
**PCT/KR2012/011287**

(87) International publication number:
**WO 2013/095054 (27.06.2013 Gazette 2013/26)**

(54) **AIRBAG FOR VEHICLE INCLUDING AN ARAMID FABRIC**

AIRBAG FÜR EIN FAHRZEUG ENTHALTEND EIN ARAMIDGEWEBE

COUSSIN DE SÉCURITÉ GONFLABLE COMPRENANT UN TISSU EN ARAMIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2011 KR 20110139484
21.12.2011 KR 20110139483**

(43) Date of publication of application:
**29.10.2014 Bulletin 2014/44**

(73) Proprietor: **Kolon Industries, Inc.
Gwacheon-si, Gyeonggi-do 13837 (KR)**

(72) Inventors:
• **KIM, Hee-Jun**
**Daegu 701-764 (KR)**
• **KIM, Hyung-Keun**
**Seongju-gun**
**Gyeongsangbuk-do 719-893 (KR)**
• **YOUN, Jung-Hoon**
**Gumi-si**
**Gyeongsangbuk-do 730-140 (KR)**
• **KWAK, Dong-Jin**
**Gumi-si**
**Gyeongsangbuk-do 730-819 (KR)**
• **LEE, Sang-Mok**
**Gumi-si**
**Gyeongsangbuk-do 730-020 (KR)**

(74) Representative: **Ter Meer Steinmeister & Partner
Patentanwälte mbB
Nymphenburger Straße 4
80335 München (DE)**

(56) References cited:
JP-A- H0 632 190        JP-A- 2003 171 842
KR-A- 20090 104 534     KR-A- 20110 077 813
KR-A- 20110 077 813     KR-B1- 101 072 150
US-A- 4 020 209

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to an aramid fabric and an airbag for a vehicle including the same. More particularly, the present invention relates to an aramid fabric and an airbag for a vehicle including the same, wherein the aramid fabric may endure high levels of impact force and may exhibit superior air sealing performance, dimensional stability and packing property, and may thus be adapted for use in an external airbag for a vehicle.

### Background Art

Generally, an airbag refers to a vehicle safety device for providing protection to the vehicle occupants during a frontal or lateral vehicle collision at a predetermined speed or above by triggering explosive chemicals to generate a gas and inflate the airbag cushion upon sensing a crash with a crash impact sensor.

With the recent increase in interest in vehicle safety, thorough research and development into a variety of airbags for vehicles has been ongoing. Furthermore, as pedestrian laws have been strengthened these days, an external airbag for a vehicle is being developed, which is provided to the outside of a vehicle such as a bumper beam to reduce injuries to pedestrians in the event of them being struck by a vehicle.

However, because an external airbag which is mounted to the outer bumper of a vehicle functions to buffer the external impact force on the vehicle body, it should be able to absorb higher impact force compared to typical internal airbags. Hence, the external airbag has to endure, absorb and buffer higher impact force. To this end, there is a need to develop novel fabric materials that are capable of normally performing the functions thereof without melting or rupturing of the fabric under high impact force.

Meanwhile, conventional airbag materials may include fabrics made of fibers such as polyester, Nylon 6 or Nylon 66, but these fabrics are not sufficiently durable to withstand high levels of impact force, high temperature or high pressure which are applied to the external airbag, and may thus be improper for use in external airbags.

Like typical materials for internal airbags, materials for external airbags have to show superior air sealing effects and dimensional stability, yet should be able to be compactly folded so as to exhibit good packing property.

KR 2009 0104534 A discloses an aramid fabric made of an aramid yarn having a fineness of 699 dtex (630 deniers) and a rubber layer coated on the aramid fabric layer.

KR 2011 0077813 A discloses the use of an air-bag to protect the pedestrian.

## Disclosure

### Technical Problem

Accordingly, the present invention is intended to provide an aramid fabric, which may endure high levels of impact force and may exhibit superior air sealing performance, dimensional stability and packing property, and is thereby suitable for use in an external airbag for a vehicle.

In addition, the present invention is intended to provide an airbag for a vehicle, especially an external airbag for a vehicle, which includes the aramid fabric.

### Technical Solution

The present invention provides an airbag for a vehicle, comprising an aramid fabric according to claim 1. The aramid fabric includes an aramid fabric layer comprising an aramid yarn having a fineness of 333.3 to 1111.1 dtex (300 to 1000 denier); and a rubber coating layer formed on the aramid fabric layer, wherein the strength-elongation index ($TI^{wa}$) in a warp direction of the fabric is 2.52 to 4.32, as defined by Equation 1 below, and the coating amount of the rubber coating layer is 20 to 100 g/m$^2$:

$$[\text{Equation 1}]$$

$$TI^{wa} = T^{wa}/(S^{wa} \times D)$$

wherein $T^{wa}$ is the tensile strength (N/5cm) in a warp direction of the aramid fabric as measured by the International Organization for Standardization (ISO) 13934-1 method, $S^{wa}$ is the tensile elongation (%) in a warp direction of the aramid fabric as measured by the ISO 13934-1 method, and D is the fineness (dtex) of the aramid yarn.

The present invention provides an airbag for a vehicle, including the aramid fabric.

Hereinafter, a detailed description will be given of an aramid fabric and an airbag for a vehicle including the same according to specific embodiments of the present invention. However, it is not intended to limit the present invention to disclosed forms, and it should be understood that all the modifications, equivalents or substitutions within the idea and technical scope of the present invention are included in the present invention.

As used herein, the terms "comprise", "include", or "have" designate that described constitutional elements (or constitutional components) exist, but it should be understood that they do not previously exclude the possibility of existence or adding of one or more other constitutional elements (or constitutional components).

According to an embodiment of the present invention, the fabric is configured to include a fabric layer comprising an aramid yarn with a predetermined fineness and a rubber coating layer formed in an optimum coating amount thereon. Such an aramid fabric satisfies specific properties defined by Equation 1, for example, a strength-elongation index ($TI^{wa}$) in a warp direction in a specific range.

The fabric of the present invention basically includes a fabric layer comprising an aramid yarn. This aramid yarn is a kind of aromatic polyamide fiber and is known to have superior thermal resistance and mechanical properties. As the fabric includes the aramid yarn and the fabric layer, it may exhibit superior thermal resistance and mechanical properties, and may withstand high impact force, high temperature and high pressure.

A nylon-based fabric, which has been conventionally used for airbags, is durably insufficient to satisfy high mechanical properties required of external airbags. For example, even when a nylon-based fabric is manufactured to have a high cover factor, it cannot withstand the high levels of impact force applied to external airbags due to insufficient tensile strength thereof. Whereas, the aramid fabric layer may endure higher levels of impact force and may show good mechanical properties.

Also, in this embodiment, the aramid fabric includes the aramid yarn the fineness and density of which are adjusted in predetermined ranges to thus achieve an appropriate cover factor range of the fabric layer, and various properties including the coating amount of the rubber component, etc. are controlled, so that the fabric satisfies the strength-elongation index ($TI^{wa}$) in a warp direction in a specific range. The aramid fabric of the present invention, having a satisfactory strength-elongation index ($TI^{wa}$) in a warp direction, has been confirmed to endure, absorb and buffer high levels of impact force applied to external airbags, and also to exhibit appropriate flexibility and thus superior packing property. Particularly, the coating amount of the rubber coating layer applied on the aramid fabric layer is optimized, thus securing good mechanical properties and air sealing effects of the fabric and also maximizing impact absorption performance for pedestrians.

Thus, the aramid fabric of the present invention may be very useful in an airbag for a vehicle, especially an external airbag for a vehicle.

The aramid fabric includes an aramid fabric layer comprising an aramid yarn having a fineness of 333.3 to 1111.1 dtex (300 to 1000 denier); and a rubber coating layer formed on the aramid fabric layer, wherein the strength-elongation index ($TI^{wa}$) in a warp direction of the fabric is 2.52 to 4.32, as defined by Equation 1 below, and the coating amount of the rubber coating layer is about 20 to 100 g/m$^2$ or about 25 to 80 g/m$^2$:

$$[\text{Equation 1}]$$

$$TI^{wa} = T^{wa}/(S^{wa} \times D)$$

wherein $T^{wa}$ is the tensile strength (N/5cm) in a warp direction of the aramid fabric as measured by the ISO 13934-1 method, $S^{wa}$ is the tensile elongation (%) in a warp direction of the aramid fabric as measured by the ISO 13934-1 method, and D is the fineness (dtex) of the aramid yarn.

Also, the aramid fabric may have a strength-elongation index ($TI^{we}$) of 3.06 to 4.86 in a weft direction as defined by Equation 2 below.

$$[\text{Equation 2}]$$

$$TI^{we} = T^{we}/(S^{we} \times D)$$

In Equation 2, $T^{we}$ is the tensile strength (N) in a weft direction of the aramid fabric as measured by the ISO 13934-1 method, $S^{we}$ is the tensile elongation (%) in a weft direction of the aramid fabric as measured by the ISO 13934-1 method, and D is the fineness (dtex) of the aramid yarn.

As is apparent from the following examples, the aramid fabric includes the aramid yarn, and is optimized in tensile strength and tensile elongation by adjusting properties of the yarn and the fabric such as fineness and density of the yarn, the cover factor and the coating amount. Accordingly, this fabric may effectively absorb the energy of high temperature-high pressure gas and may withstand high levels of impact force. Particularly, this fabric may include an aramid yarn having low fineness and high strength, and the aramid yarn may have a fineness of 333.3 to 1111.1 dtex (300 to 1000 denier). The aramid fabric has a strength-elongation index ($TI^{wa}$) of about 2.52 to 4.32 in a warp direction as defined by Equation 1, which may be achieved by optimizing tensile strength ($T^{wa}$) and tensile elongation ($S^{wa}$) in a warp direction of the fabric under control of the properties of the yarn and the fabric. The aramid fabric satisfying the strength-elongation index ($TI^{wa}$) in a warp direction may exhibit not only enhanced toughness and energy absorption performance but also superior foldability, flexibility and packing property adapted for airbag fabrics, compared to conventional nylon and PET fabrics.

The aramid fabric is optimized in tensile strength ($T^{we}$) and tensile elongation ($S^{we}$) in a weft direction, as well as tensile strength ($T^{wa}$) and tensile elongation ($S^{wa}$) in a warp direction, thereby improving dimensional stability, packing property and air sealing effects while maintaining good mechanical properties of the fabric. By optimizing the tensile strength ($T^{we}$) and the tensile elongation ($S^{we}$) in a weft direction of the fabric and the fineness of the yarn, the strength-elongation index ($TI^{we}$) in a weft direction of the fabric as defined by Equation 2 may be 3.06 to 4.86 or about 3.7 to 5.2.

As mentioned above, in order for the aramid fabric to effectively absorb impact energy instantly generated in the event of airbag deployment, the fineness of the yarn of the fabric and the tensile strength and the tensile elongation of the fabric are adjusted in the optimum ranges, thereby improving mechanical properties and foldability of a final fabric. Thermal resistance and strength sufficient to withstand the high temperature-high pressure gas generated from the inflator by triggering explosive chemicals in the airbag are secured, so that the airbag may be effectively deployed, and both tensile strength and tensile elongation should be optimized to attain good foldability. As such, the tensile strength and the tensile elongation of the fabric may be adjusted so as to fall in the strength-elongation index range of the fabric as above.

More specifically, tensile strength of the fabric represented by $T^{wa}$ in Equation 1, namely, tensile strength in a warp direction of the aramid fabric, may be about 4000 N/5cm or more, for example, about 4000 to 9000 N/5cm, or about 4100 to 8800 N/5cm. Also, tensile elongation represented by $S^{wa}$ in Equation 1, namely, tensile elongation in a warp direction of the aramid fabric, may be about 2.0% or more, for example, about 2.0 to 8.0%, about 2.5% or more, or 2.5 to 5.0%. When the tensile strength ($T^{wa}$) of about 4000 N/5cm or more in a warp direction of the fabric and the tensile elongation ($S^{wa}$) of about 2.0% or more in warp direction of the fabric are maintained in this way, energy absorption performance may be sufficiently secured upon airbag deployment. If the tensile strength and the tensile elongation of the fabric are less than the lower limits, the resulting airbag cannot exhibit desired impact absorption performance when provided to the outside of a vehicle.

When the strength-elongation index ($TI^{wa}$) in a warp direction of the fabric is 2.52 or more, satisfactory impact absorption performance for the vehicle and the vehicle occupants upon airbag deployment may be obtained. On the other hand, when it is about 4.32 or less, packing property suitable for an airbag cushion assembly may be attained. If the strength-elongation index ($TI^{wa}$) in a warp direction of the fabric is less than about 2.52, the fabric has low strength, and may thus be easily torn upon airbag deployment. In contrast, if the strength-elongation index ($TI^{wa}$) in a warp direction of the fabric exceeds about 4.32, stiffness of the fabric may become too high, undesirably deteriorating foldability of the airbag cushion, making it difficult to apply the resulting fabric to an airbag. Likewise, the strength-elongation index ($TI^{we}$) in a weft direction of the fabric may set to 3.06 to 4.86.

Meanwhile, in order for the aramid fabric to secure high thermal resistance against high temperature and high pressure, the uncoated aramid fabric layer may have a thermal resistance constant (X) of 6.5 to 400, for example, about 13.0 to 350 or about 80 to 200, as defined by Equation 3 below.

[Equation 3]

$$\text{Thermal resistance constant } (X) = (T \times t)/(600 \times D')$$

In Equation 3, T is the temperature of a hot rod during free fall on the fabric layer in the range of 350 to 750 °C, t is the amount of time (sec) taken for the hot rod to pass through the fabric layer from a point of contact with the fabric layer by free fall, and D' is the thickness (mm) of the aramid fabric layer.

Based on the test results by the present inventors, when a specific aramid fabric layer having a thermal resistance index optimized in a predetermined range is included, the aramid fabric can be confirmed to be useful as an airbag fabric for effectively absorbing and enduring energy of high temperature-high pressure gas. Particularly, as the thermal resistance index (X) of the fabric layer before the rubber-coating process in the aramid fabric is about 6.5 or more or about 13.0 or more, the fabric can be confirmed to effectively absorb and endure energy of high temperature-high pressure gas to thus be very effectively used as an airbag fabric.

As used herein, the term "thermal resistance constant" refers to the retention time taken for a hot rod to pass through the fabric layer based on the thickness of the aramid fabric layer, as represented by Equation 3, and designates the thermal resistance index of the fabric layer for use in an airbag under high-temperature conditions. The thermal resistance constant is a random value varying depending on the material of the airbag fabric, and is used to make simulations predicting how much a fabric layer and a fabric for use in an airbag may endure the instantaneous high temperature-high pressure gas ejected from the inflator in the event of airbag deployment. The higher melting heat capacity $\Delta H$ of the aramid yarn leads to a higher thermal resistance constant of the fabric layer. Particularly, the low thermal resistance constant of the aramid fabric layer deteriorates thermal resistance of the fabric required to sufficiently endure high temperature-high pressure gas generated from the inflator upon airbag deployment, so the airbag fabric using the aramid fabric is susceptible to rupture or thermal fusion. Hence, if the thermal resistance constant of the aramid fabric layer in the fabric is less than, for example, 6.5, the fabric may be melted before complete deployment of the external airbag cushion and is thus unsuitable for use in an airbag, especially an external airbag.

The aramid fabric further includes the rubber coating layer formed by applying or laminating a rubber component on the surface of the aramid fabric layer. The aramid fabric coated with the rubber component may have a thermal resistance constant (X) of about 200 or more, for example, about 200 to 350 when the temperature (T) of the hot rod is 750 °C.

The rubber component as used herein may include, for example, silicone-based rubber or polyurethane-based rubber, and specifically includes at least one selected from the group consisting of powdered silicone rubber, liquid silicone rubber, polyurethane, and emulsion type silicone resin. The coating weight per unit area of the rubber coating layer relative to the fabric layer may be about 20 to 100 g/m$^2$ or about 25 to 80 g/m$^2$.

Although the rubber coating layer may be formed by performing a coating process with a rubber component once, a coating process with a rubber component is preferably repeated at least two times to obtain the given coating amount range. Specifically, because the fabric has been already stowed in an airbag which is deployed to operate, the rubber coating layer may be formed by primary coating and then secondary coating which makes the surface of fabrics smooth so as to control friction between the fabrics. As such, the secondary coating may be implemented such that the coating amount is about 10 g/m$^2$ or less.

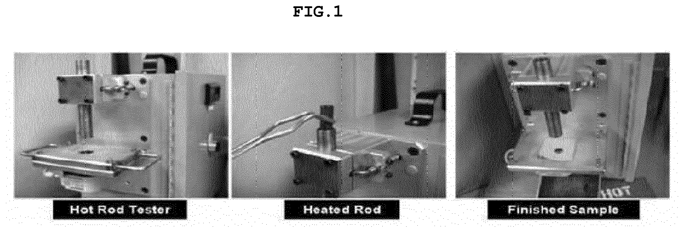

In a preferred embodiment of the present invention, the thermal resistance constant may be measured using a device (a hot rod tester) as illustrated in FIG. 1. In the hot rod tester, the hot rod is heated to about 350 to 750°C and arranged to drop from the above the fabric (layer). The heated hot rod in a state of free fall is dropped onto the fabric (layer) . The period of time taken for the hot rod to completely pass through the fabric (layer) from the point of contact with the aramid fabric (layer) is measured and substituted into Equation 3 based on the thickness of the aramid fabric (layer) to calculate the thermal resistance constant of the aramid fabric (layer). In a specific embodiment of the present invention, the hot rod may be placed above the aramid fabric (layer) at a distance (d) of about 60 to 85 mm. The hot rod as used herein is made of a metal or ceramic material having a thermal conductivity of about 40 to 70 W/m·K and a weight of about 40 to 60 g.

The static air permeability of the aramid fabric, as measured by the American Society for Testing and Materials (ASTM) D 737 method, may be about 0.14 m$^3$/min (5.0 cfm) or less, about 0.08 to 0.14 m$^3$/min (0.3 to 5.0 cfm), about 0.11 m$^3$/min (4.0 cfm) or less, about 0.01 to 0.11 m$^3$/min (0.3 to 4.0 cfm), about 0.08 m$^3$/min (3.0 cfm) or less, or about 0.01 to 0.08 m$^3$/min (0.3 to 3.0 cfm) when $\Delta P$ is 125 pa based on the uncoated fabric layer; and about 0.40 m$^3$/min (14 cfm) or less, about 020 to 0.40 m$^3$/min (7 to 14 cfm), about 0.28 m$^3$/min (10 cfm) or less, or about 0.14 to 0.34 m$^3$/min (5 to 12 cfm) when $\Delta P$ is 500 pa. The term "static air permeability" as used herein refers to the quantity of air penetrating into the airbag fabric (layer) under a predetermined pressure. The static air permeability decreases with a decrease in the filament fineness (denier per filament) of the yarn and an increase in the density of the fabric (layer). Further, the air permeability of the aramid fabric may become lower by providing the rubber coating layer on the fabric layer, and may approximate to 0 cfm. When the rubber coating layer is formed in this way, the static air permeability of the fabric, as measured by the ASTM D 737 method, may be about 0.1 cfm or less, about 0 to 0.003 m$^3$/min (0 to 0.1 cfm), about 0.0014 m$^3$/min (0.05 cfm) or less, or about 0 to 0.0014 m$^3$/min (0 to 0.05 cfm) when $\Delta P$ is 125 pa; and about 0.0084 m$^3$/min (0.3 cfm) or less, about 0 to 0.0084 m$^3$/min (0 to 0.3 cfm), about 0.003 m$^3$/min (0.1 cfm) or less, or about 0 to 0.003 m$^3$/min (0 to 0.1) cfm when $\Delta P$ is 500 pa.

In view of maintaining air tightness of the airbag fabric, it may not be desirable that the aramid fabric, either uncoated or coated, has a static air permeability or a dynamic air permeability above the upper limit of the corresponding air permeability range as defined above.

The thickness of the aramid fabric layer, as measured by the ASTM D 1777 method, may be about 0.20 to 0.50 mm or about 0.22 to 0.45 mm in view of securing high packing property and foldability when the airbag is stowed in a vehicle, as well as good mechanical properties and air sealing effects. Furthermore, the thickness of the aramid fabric layer may be set to about 0.20 mm or more in consideration of the dimensional stability of the airbag cushion which is folded and stowed in a vehicle, and to 0.50 mm or less considering the foldability of the airbag cushion.

The aramid fabric of the present invention may have a stiffness of about 14.7 N (1.5 kgf), about 6.9 N (0.7 kgf) to 14.7 N (1.5 kgf), about 14.2 N (1.45 kgf) or less, about 7.4 N (0.75 kgf) to 14.2 N (1.45 kgf), about 13.7 N (1.4 kgf) or less, or about 7.8 N (0.8 kgf) to 13.7 N (1.4 kgf), as measured by the ASTM D 4032 method. If the stiffness of the fabric exceeds about 14.7 N (1.5 kgf), the fabric may have very poor foldability, leading to deteriorated foldability of the airbag cushion. If the fabric has excessively low stiffness, it cannot function to sufficiently protect and support the airbag which is inflated and deployed, and may also deteriorate dimensional stability even when the airbag is stowed in a vehicle, undesirably decreasing packing property. Hence, the stiffness of the fabric may be set to about 6.9 N (0.7 kgf) or more.

Further, the aramid fabric should have a minimum elongation under tensile force caused by high-pressure air in order to acquire air tightness, and also should exhibit maximum energy absorption performance from the emitted high temperature-high pressure gas in order to secure sufficient mechanical properties upon airbag deployment. Accordingly, the fabric is woven such that the fabric layer has a cover factor in the optimum range of $622.50 \frac{\sqrt{dtex}}{cm}$ to $921.29$ $\frac{\sqrt{dtex}}{cm}$ ($1,500 \frac{\sqrt{denier}}{inch}$ to $2,200 \frac{\sqrt{denier}}{inch}$) or $643.25 \frac{\sqrt{dtex}}{cm}$ to $900.35 \frac{\sqrt{dtex}}{cm}$ ($1,550 \frac{\sqrt{denier}}{inch}$ to $2,200 \frac{\sqrt{denier}}{inch}$) as defined by Equation 3 below, leading to enhanced air tightness and energy absorption performance upon airbag deployment.

[Equation 4]

Cover factor (CF)

= warp density (thread/inch) $\times \sqrt{warp\ denier}$ + weft density

(thread/inch) $\times \sqrt{weft\ denier}$ When the cover factor of the fabric layer is less than about $622.50 \frac{\sqrt{dtex}}{cm}$ ($1,500 \frac{\sqrt{denier}}{inch}$), bundling of the fabric layer may become weak, and thus tensile strength of the fabric may decrease, making it impossible to sufficiently manifest impact absorption performance of the airbag cushion. Furthermore, air may be easily emitted to the outside during inflation of the airbag. In contrast, if the cover factor of the fabric ayer is greater than about $921.29 \frac{\sqrt{dtex}}{cm}$ ($2,200 \frac{\sqrt{denier}}{inch}$), packing property and foldability of the airbag cushion may remarkably deteriorate when the airbag is stowed in a vehicle.

The warp fineness and the weft fineness for the aramid fabric layer and the fabric, namely, the fineness of the aramid yarn in a warp direction and in a weft direction is 333.3 to 1111.1 dtex (300 to 1000 denier) or about 444.4 to 999.9 dtex (400 to 900 denier). Although the warp fineness and the weft fineness may be different from each other, they may be set to be the same as each other so as for more uniform properties. The warp fineness and the weft fineness of the aramid fabric may be determined in the aforementioned range in view of securing superior stiffness as well as good mechanical properties by optimizing the strength-elongation index of the fabric. As such, the denier is a unit used in measuring the thickness of yarn or fiber, and 1 denier means that 9,000 m of yarn weigh 1 g.

The aramid fabric may possess good mechanical properties and thermal resistance due to the presence of the aramid yarn therein, and the aramid yarn may have a molecular structure configured such that all backbones except for the amide group are connected with a phenyl ring. Furthermore, aramid may be divided into meta type (m-) and para type (p-) depending on the connection state of the phenyl ring. Particularly useful is a para type in terms of exhibiting higher properties of the aramid fabric. The p-aramid yarn is configured such that the planes of phenyl rings are stacked, resulting in high crystallinity, superior thermal resistance, low shrinkage and good mechanical properties such as high strength and elastic modulus, and is thus more preferably used for the fabric and the yarn therein.

The warp density and the weft density of the fabric layer of the aramid fabric, namely, the weave density in a warp direction and in a weft direction may be about 9.84 to 21.65 threads/cm (25 to 55 th/inch), about 9.84 to 18.50 threads/cm (25 to 47 th/inch), or about 10.23 to 17.71 threads/cm (26 to 45 th/inch). The warp density and the weft density of the aramid fabric layer may be set to about 9.84 threads/cm (25 th/inch) or more in order to secure good mechanical properties of the airbag fabric, and also to about 21.65 threads/cm (55 th/inch) or less in order to increase foldability of the fabric and decrease tear strength.

The aramid fabric may be manufactured by weaving the aramid yarn in the aforementioned ranges of fineness and density of the yarn and the cover factor of the fabric layer to form an aramid fabric layer, which is then subjected to scouring, thermosetting and coating with a rubber component. The coating amount of the rubber component is optimized, in addition to the fineness and density of the aramid yarn and the cover factor of the fabric layer, resulting in an aramid fabric having good properties according to the present invention.

In a specific embodiment, the aramid fabric may be manufactured by subjecting an aramid yarn to beaming in a weft direction and a warp direction, weaving, scouring and thermosetting and then coating with a rubber component. The fabric may be manufactured using a typical weaving machine, and the present invention is not limited to any specific weaving machine. A plain weave fabric may be manufactured using a rapier loom, an air jet loom, or a water jet loom.

The coating process with polyurethane-based rubber or silicone-based rubber enables the workability of a subsequent sewing process for forming an airbag from the fabric to be optimized. If the coating process conditions including the kind of rubber component or the coating amount are not optimized, yarn filaments may be separated during a sewing process, significantly deteriorating workability. However, as the coating process conditions are optimized, sewing workability becomes higher, resulting in an aramid fabric having optimum properties such as air sealing performance, thermal resistance and friction resistance, with high sewing workability.

The fabric including the rubber coating layer according to the present invention may be manufactured into an airbag cushion having a predetermined shape through typical cutting and sewing. The airbag cushion is not limited to a particular form, and may have a typical form. Preferably useful is, for example, a plain weave fabric.

According to another embodiment of the present invention, an airbag for a vehicle, including the aramid fabric, is provided. In addition, an airbag system including the airbag is provided, and may include a typical device well-known to those skilled in the art. The airbag for a vehicle may include, for example, an external airbag for a vehicle such as a pedestrian airbag or a bumper airbag.

Particularly, a pedestrian airbag is deployed on the hood of a vehicle so as to buffer impact on a pedestrian colliding with the front glass of the vehicle, and a bumper airbag is deployed below the light of a vehicle so as to buffer impact with a pedestrian or a structure or buffer impact on the vehicle itself.

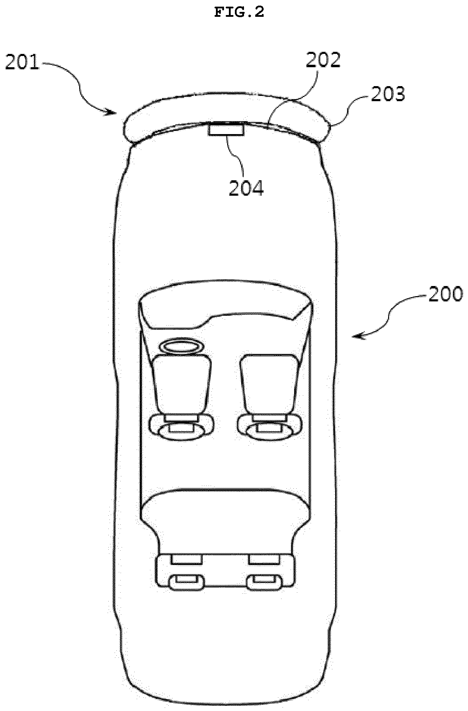

The aramid fabric having high mechanical properties and superior flexibility may be effectively used in a bumper airbag which is mounted to the bumper of a vehicle. Such a bumper airbag is illustrated in FIG. 2. As illustrated in FIG. 2, a bumper airbag device 201 includes an airbag 203 which is stowed in a state of being folded into the front bumper 202 of a vehicle 200, and an inflator 204 connected to the airbag 203. When the airbag device 201 operates, high temperature-high pressure gas is generated by the inflator 204, and then supplied into the airbag 203, thereby deploying the airbag on the front bumper 202. Accordingly, impact from a vehicle colliding with the front bumper 202 or impact with the pedestrian may be mitigated. Although the airbag device using the aramid fabric according to the present invention is illustratively stowed in the front bumper of the vehicle, it may be mounted to the side or the rear bumper of the vehicle, as necessary.

## Advantageous Effects

According to the present invention, a fabric having a specific strength-elongation index can be woven from an aramid yarn, thereby providing an airbag fabric having good mechanical properties, flexibility and foldability, and an airbag for a vehicle including the same.

The aramid fabric can have good mechanical properties, dimensional stability, and air sealing effects, with superior foldability and flexibility. Therefore, when it is stowed in a vehicle, packing property can be remarkably improved and impact on the vehicle and the vehicle occupants can be minimized, so that the vehicle occupants can be protected with safety.

Furthermore, the aramid fabric can absorb and buffer very high levels of impact force, and can thus be usefully applied to an external airbag which is provided to the outside of a vehicle so as to minimize impact to the vehicle occupants and to the vehicle itself.

## Description of Drawings

FIG. 1 is of photographs illustrating a device for measuring a thermal resistance constant according to an embodiment of the present invention; and
FIG. 2 is a schematic view illustrating a vehicle with an external airbag (a bumper airbag) provided to the outside thereof.

**Mode for Invention**

A better understanding of the present invention may be obtained through the following examples which are set forth to illustrate, but are not to be construed to limit the present invention.

Examples 1 to 9

Each airbag fabric was manufactured using an aramid yarn under the processing conditions as shown in Table 1 below.

Specifically, a grey fabric for an airbag was woven from an aramid yarn using a rapier loom. Scouring and thermal treatment were continuously repeated two times on the grey fabric, thus manufacturing an airbag fabric. The uncoated fabric was coated with a silicone coating agent composed of liquid silicone rubber (LSR) by a knife over-roll coating process, thus forming a silicon-coated fabric, which was used as a woven fabric for an airbag cushion.

The woven fabric was cut using a laser cutter, and sewn under sewing conditions as shown in Table 1 below, thus manufacturing an airbag cushion.

The kind of the yarn for the airbag fabric and the weave form thereof, the coating component and the coating amount, and the kind of sewing yarn and the sewing process are given in Table 1 below. The cover factor (CF) of the fabric was calculated by Equation 4 below. The other conditions were dependent on typical conditions for manufacturing an airbag cushion.

$$[Equation 4]$$
$$Cover\ factor\ (CF) =$$
$$warp\ density \times \sqrt{(warp\ fineness)} + weft\ density \times \sqrt{(weft\ fineness)}$$

The values in Table 1 below expressed in thread/inch (th/inch), denier (de) and √denier/inch and can be converted into threads/cm (th/ cm), decitex (dtex) and √dtex/cm according to the following conversion factors:

$$1\ th/inch = 0.39\ th/cm$$

$$1\ de = 1.111\ dtex$$

Cover factor (CF): 1 √denier/inch = about 0.42 √dtex/cm

[Table 1]

|  | EX.1 | EX.2 | EX.3 | EX.4 | EX.5 | EX.6 | EX.7 | EX.8 | EX.9 |
|---|---|---|---|---|---|---|---|---|---|
| Yarn | Aramid | Aramid | Aramid | Aramid | Aramid | Aramid | Aramid | Aramid | Aramid |
| Warp fineness (de) | 400 | 400 | 600 | 600 | 840 | 840 | 840 | 600 | 400 |
| Weft fineness (de) | 400 | 400 | 600 | 600 | 840 | 840 | 840 | 600 | 400 |
| Warp density (th/inch) | 43 | 53 | 35 | 43 | 27 | 32 | 37 | 43 | 53 |
| Weft density (th/inch) | 43 | 53 | 35 | 43 | 27 | 32 | 37 | 43 | 53 |

(continued)

|  | EX.1 | EX.2 | EX.3 | EX.4 | EX.5 | EX.6 | EX.7 | EX.8 | EX.9 |
|---|---|---|---|---|---|---|---|---|---|
| Cover factor (CF) | 1720 | 2120 | 1715 | 2107 | 1565 | 1855 | 2145 | 2106 | 2120 |
| Coating process | Yes | Yes | Yes | Yes | Yes | Yes | Yes | Yes | Yes |
| Coating material | Silicone | Silicone | Silicone | Silicone | Silicone | Silicone | Silicone | Silicone | Silicone |
| Coating amount (gsm) | 45 | 75 | 45 | 75 | 45 | 75 | 25 | 20 | 20 |
| Sewing yarn | Aramid | Aramid | Aramid | Aramid | Aramid | Aramid | Nylon | Nylon | Nylon |
| Sewing yarn fineness (de) | 1360 | 1360 | 1360 | 1360 | 1360 | 1360 | 1260 | 1260 | 1260 |
| Sewing stitches (th/ 100mm) | 28 | 35 | 28 | 35 | 28 | 35 | 35 | 35 | 35 |

Various properties of the airbag cushions manufactured in Examples 1 to 9 were measured using the following methods. The measured properties are summarized in Table 2 below.

(a) Tensile strength and tensile elongation

The aramid fabric was cut into a test specimen, which was gripped in the lower stationary clamp of a tensile testing machine according to the ISO 13934-1 method, while the upper clamp was moved upward, to measure the tensile strength and the tensile elongation in a warp direction ($T^{wa}$, $S^{wa}$) and a weft direction ($T^{we}$, $S^{we}$) of the fabric when the airbag fabric specimen was ruptured.

The tensile strength ($T^{wa}$) and the tensile elongation ($S^{wa}$) in a warp direction of the fabric and the fineness (D) of the yarn were substituted into Equation 1 below to calculate the strength-elongation index ($TI^{wa}$) in a warp direction of the fabric.

[Equation 1]

$$TI^{wa} = T^{wa}/(S^{wa} \times D)$$

In Equation 1, $T^{wa}$ is the tensile strength (N/5cm) in a warp direction of the aramid fabric as measured by the ISO 13934-1 method, $S^{wa}$ is the tensile elongation (%) in a warp direction of the aramid fabric as measured by the ISO 13934-1 method, and D is the fineness (de) of the aramid yarn.

Also, the tensile strength ($T^{we}$) and the tensile elongation ($S^{we}$) in a weft direction of the fabric and the fineness (D) of the yarn were substituted into Equation 2 below to calculate the strength-elongation index ($TI^{we}$) in a weft direction of the fabric.

[Equation 2]

$$TI^{we} = T^{we}/(S^{we} \times D)$$

In Equation 2, $T^{we}$ is the tensile strength (N/5cm) in a weft direction of the aramid fabric as measured by the ISO 13934-1 method, $S^{we}$ is the tensile elongation (%) in a weft direction of the aramid fabric as measured by the ISO 13934-1 method, and D is the fineness (de) of the aramid yarn.

(b) Thermal resistance constant

The uncoated aramid fabric layer before the rubber-coating process was cut into test specimens in dimension of 50 mm × 50 mm. Each of the specimens was placed in a hot rod tester illustrated in FIG. 1. In the hot rod tester, the hot rod (steel, 10 mm diameter, 82 mm long, 50 g weight, thermal conductivity: 55 W/m·K) was heated to a temperature (T) of 450 °C and 600°C at a rate of 20 °C/min and placed above the specimen at a distance (d) of about 76 mm. From above the specimen, the hot rod was dropped in free fall to measure the amount of time (t) (sec) taken for the hot rod to completely pass through the specimen from the point of contact with the specimen. Then the thermal resistance constant was determined as defined by Equation 3 below. When the hot rod had not passed through the specimen even after 1 min, the value measured on a 1-min basis was applied.

(c) Thickness

The uncoated aramid fabric layer before the rubber-coating process was measured in regard to thickness according to the ASTM D 1777 method.

(d) Stiffness

The fabric was evaluated in regard to stiffness according to the ASTM D 4032 method (circular bend test method) using a stiffness testing machine. The stiffness testing adopted the cantilever method, where the stiffness testing machine used a cantilever system as a test stand declined at a predetermined angle for bending the fabric to measure the length of the fabric after bending.

(e) Air permeability

According to the ASTM D 737 method, the airbag fabric was kept under conditions of 20 °C and 65% RH for one day or longer. The static air permeability was determined as the volume of air passing through the circular cross-section 38 $cm^2$ in size, where the air pressure was 125 pa.

The values in Table 2 below expressed in kgf and cfm and can be converted to Newton (N) and cubic metre/minute ($m^3$/min) according to the following conversion factors:

$$1 \text{ kgf} = 9,8 \text{ N}$$

$$1 \text{ cfm} = 0,028 \text{ m}^3/\text{min}$$

[Table 2]

| | Ex.1 | Ex.2 | Ex.3 | Ex.4 | Ex.5 | Ex.6 | Ex.7 | Ex.8 | Ex.9 |
|---|---|---|---|---|---|---|---|---|---|
| $T^{wa}$ (N/5cm) | 4100 | 5030 | 7100 | 8900 | 7500 | 8800 | 10000 | 8880 | 5020 |
| $S^{wa}$ (%) | 3.1 | 3.2 | 3.1 | 3.2 | 2.9 | 3.0 | 3.1 | 3.2 | 3.2 |
| $TI^{wa}$ | 3.3 | 3.9 | 3.8 | 4.6 | 3.0 | 3.6 | 3.8 | 4.6 | 3.9 |
| $T^{we}$ (N/5cm) | 4900 | 6040 | 7700 | 9300 | 8600 | 9900 | 11100 | 9300 | 6020 |
| $S^{we}$ (%) | 2.9 | 2.9 | 2.9 | 3.1 | 2.6 | 2.7 | 2.8 | 3.1 | 2.9 |
| $TI^{we}$ | 4.2 | 5.2 | 4.4 | 5.1 | 3.9 | 4.3 | 4.7 | 5.0 | 5.2 |
| Thermal resistance constant | 312 | 288 | 277 | 258 | 241 | 227 | 230 | 256 | 285 |
| Thickness (mm) | 0.24 | 0.26 | 0.27 | 0.29 | 0.31 | 0.33 | 0.45 | 0.26 | 0.20 |
| Stiffness (kgf) | 1.0 | 1.16 | 1.2 | 1.25 | 1.3 | 1.35 | 1.41 | 1.34 | 1.28 |

(continued)

|  | Ex.1 | Ex.2 | Ex.3 | Ex.4 | Ex.5 | Ex.6 | Ex.7 | Ex.8 | Ex.9 |
|---|---|---|---|---|---|---|---|---|---|
| Air permeability (CFM) | 0 | 0 | 0 | 0 | 0 | 0 | 0 | 0 | 0 |

Comparative Examples 1 to 7

Airbag fabrics and airbag cushions using the same were manufactured in the same manner as in Examples 1 to 9, with the exception that the conditions of Table 3 below were applied.

The values in Table 3 below expressed in thread/inch (th/inch), denier (de) and √denier/inch and can be converted into threads/cm (th/cm), decitex (dtex) and √dtex/cm according to the following conversion factors:

$$1 \text{ th/inch} = 0.39 \text{ th/cm}$$

$$1 \text{ de} = 1.111 \text{ dtex}$$

Cover factor (CF): 1 √denier/inch = about 0.42 √dtex/cm

[Table 3]

|  | C.Ex.1 | C.Ex.2 | C.Ex.3 | C.Ex.4 | C.Ex.5 | C.Ex.6 | C.Ex.7 |
|---|---|---|---|---|---|---|---|
| Yarn | Nylon | Nylon | Aramid | Aramid | Aramid | Aramid | Aramid |
| Warp fineness (de) | 420 | 630 | 400 | 400 | 840 | 840 | 400 |
| Weft fineness (de) | 420 | 630 | 400 | 400 | 840 | 840 | 400 |
| Warp density (th/inch) | 46 | 41 | 30 | 30 | 43 | 43 | 38 |
| Weft density (th/inch) | 46 | 41 | 30 | 30 | 43 | 43 | 38 |
| Cover factor (CF) | 1885 | 2058 | 1200 | 1200 | 2261 | 2261 | 1520 |
| Coating process | Yes | Yes | No | Yes | No | Yes | Yes |
| Coating material | Silicone | Silicone | - | Silicone | - | Silicone | Silicone |
| Coating amount (gsm) | 45 | 45 | - | 45 | - | 45 | 15 |
| Sewing yarn | Aramid | Aramid | Aramid | Aramid | Aramid | Aramid | Aramid |
| Sewing yarn fineness (de) | 1360 | 1360 | 1360 | 1360 | 1360 | 1360 | 1360 |
| Sewing stitches (th/100mm) | 28 | 35 | 28 | 35 | 28 | 35 | 35 |

Various properties of the airbag cushions of Comparative Examples 1 to 7 were measured using the aforementioned methods. The measured properties are summarized in Table 4 below.

The values in the Table 4 below expressed in kgf and cfm and can be converted to Newton (N) and cubic metre/minute ($m^3$/min) according to the following conversion factors:

$$1 \text{ kgf} = 9,8 \text{ N}$$

$$1 \text{ cfm} = 0,028 \text{ m}^3/\text{min}$$

[Table 4]

| | C.Ex.1 | C.Ex.2 | C.Ex.3 | C.Ex.4 | C.Ex.5 | C.Ex.6 | C.Ex.7 |
|---|---|---|---|---|---|---|---|
| $T^{wa}$ (N/5cm) | 4590 | 6200 | 2860 | 2840 | 11800 | 11720 | 3400 |
| $S^{wa}$ (%) | 42 | 51 | 3.0 | 3.1 | 2.5 | 2.6 | 3.1 |
| $TI^{wa}$ | 0.2 | 0.1 | 2.3 | 2.2 | 5.6 | 5.3 | 2.7 |
| $T^{we}$ (N/5cm) | 4750 | 5800 | 3410 | 3400 | 13300 | 13180 | 3930 |
| $S^{we}$ (%) | 38 | 38 | 2.8 | 2.8 | 2.7 | 2.7 | 3.0 |
| $TI^{we}$ | 0.29 | 0.24 | 3.0 | 3.0 | 5.8 | 5.8 | 3.2 |
| Thermal resistance constant | 0.8 | 1.0 | 116 | 125 | 170 | 163 | 128 |
| Thickness (mm) | 0.29 | 0.39 | 0.24 | 0.26 | 0.44 | 0.46 | 0.27 |
| Stiffness (kgf) | 1.0 | 1.16 | 1.0 | 1.15 | 1.75 | 1.8 | 1.65 |
| Air permeability (CFM) | 0.0 | 0.0 | 3.6 | 0.0 | 1.3 | 0.0 | 0.3 |

As is apparent from Table 4, the fabrics of Examples 1 to 9 having the optimum strength-elongation index using the aramid yarn had a stiffness of 9.80 to 13.82 N (1.0 to 1.41 kgf) and thus exhibited superior foldability to the extent that it could be compactly folded so as to be adapted for a bumper. The aramid fabric layer of the fabric of each of Examples 1 to 9 had a thermal resistance constant of 227 to 312 and good mechanical properties, and thereby could absorb high levels of impact force from the outside of a vehicle and manifest desirable performance.

However, as is apparent from Table 4, the airbag fabrics of Comparative Examples 1 and 2 using the nylon yarn as in the prior art did not satisfy such properties. Particularly, the airbag fabrics of Comparative Examples 1 and 2 had very low thermal resistance constants of 0.8 and 1.0, respectively, and did not sufficiently endure the gas ejected from the inflator but were partially melted and damaged, and thus limitations were imposed on manifesting performance thereof outside the vehicle. Also, the airbag fabrics of Comparative Examples 3 and 4 had a very low strength-elongation index despite the use of the aramid yarn, and did not secure mechanical properties and were thus susceptible to rupture upon airbag deployment, undesirably incurring inflation problems and limitation on the performance thereof. In contrast, the airbag fabrics of Comparative Examples 5 and 6 had a very high strength-elongation index, and the stiffness values thereof were 17.16 N to 17.65 N (1.75 kgf and 1.80 kgf), respectively, which are regarded as poor, and thus such airbags could not be stowed in a space of a vehicle defined by a minimum size upon cushion folding. Also, the airbag fabric of Comparative Example 7 did not secure mechanical properties due to the very low strength-elongation index, and was thus susceptible to rupture upon airbag deployment, undesirably incurring inflation problems, and furthermore, the airbag cushion had poor inflation performance owing to low air permeability and was very inferior in foldability when stowed in a vehicle.

**Claims**

1.  An airbag for a vehicle, comprising an aramid fabric, including:

    an aramid fabric layer comprising an aramid yarn having a fineness of 333.3 to 1111.1 dtex (300 to 1000 denier); and
    a rubber coating layer formed on the aramid fabric layer,
    wherein a strength-elongation index ($TI^{wa}$) in a warp direction of the fabric is 2.52 to 4.32, as defined by Equation 1 below, a cover factor of 622.50 $\frac{\sqrt{dtex}}{cm}$ to 921.29 $\frac{\sqrt{dtex}}{cm}$ (1,500 $\frac{\sqrt{denier}}{inch}$ to 2,200 $\frac{\sqrt{denier}}{inch}$), as defined by Equation 4 below, a stiffness of 14.7 N (1.5 kgf) or less by American Society for Testing and Materials ASTM D 4032 method, and
    a coating amount of the rubber coating layer is 20 to 100 g/m$^2$:

$$[\text{Equation 1}]$$

$$TI^{wa} = T^{wa}/(S^{wa} \times D)$$

wherein $T^{wa}$ is tensile strength (N/5cm) in a warp direction of the aramid fabric as measured by International Organization for Standardization ISO 13934-1 method, $S^{wa}$ is tensile elongation (%) in a warp direction of the aramid fabric as measured by International Organization for Standardization ISO 13934-1 method, and D is fineness (dtex) of the aramid yarn, and

$$[Equation\ 4]$$
$$Cover\ factor\ (CF) =$$
$$warp\ density \times \sqrt{(warp\ fineness)} + weft\ density \times$$
$$\sqrt{(weft\ fineness)}.$$

2. The airbag according to Claim 1, wherein a strength-elongation index ($TI^{we}$) of the aramid fabric in a weft direction of the fabric is 3.06 to 4.86, as defined by Equation 2 below:

$$[Equation\ 2]$$
$$TI^{we} = T^{we}/(S^{we} \times D)$$

wherein $T^{we}$ is tensile strength (N/5cm) in a weft direction of the aramid fabric as measured by International Organization for Standardization ISO 13934-1 method, $S^{we}$ is tensile elongation (%) in a weft direction of the aramid fabric as measured by International Organization for Standardization ISO 13934-1 method, and D is fineness (dtex) of the aramid yarn.

3. The airbag according to Claim 1, wherein the aramid fabric layer has a thermal resistance constant (X) of 6.5 to 400, as defined by Equation 3 below:

$$[Equation\ 3]$$
$$Thermal\ resistance\ constant\ (X) = (T \times t)/(600 \times D')$$

wherein T is a temperature of a hot rod during free fall on the fabric layer in a range of 350 to 750 °C, t is an amount of time (sec) taken for the hot rod to pass through the fabric layer from a point of contact with the fabric layer by free fall, and D' is a thickness (mm) of the aramid fabric layer.

4. The airbag according to Claim 1, wherein the aramid yarn of the aramid fabric layer has a warp density and a weft density in a range of 9.84 to 21.65 threads/cm (25 to 55 th/inch).

5. The airbag according to Claim 1, wherein the aramid fabric layer has a thickness of 0.20 to 0.50 mm as measured by American Society for Testing and Materials ASTM D 1777 method.

6. The airbag according to Claim 1, wherein the rubber coating layer comprises a silicon-based rubber or a polyurethane-based rubber.

7. The airbag according to Claim 1, wherein the rubber coating layer is formed by repeating a coating process at least two times.

8. The airbag according to Claim 1, wherein the aramid fabric has a warp fineness and a weft fineness which are same as each other.

9. The airbag according to Claim 1, which is an external airbag for a vehicle, including a pedestrian airbag or a bumper airbag.

10. Use of an aramid fabric as defined in one of claims 1-8 in an airbag.

**Patentansprüche**

1. Airbag für ein Fahrzeug, der ein Aramidgewebe umfasst, das enthält:

   eine Aramidgewebeschicht, die ein Aramidgarn umfasst, das eine Feinheit von 333,30 bis 1.111,10 dtex (300 bis 1.000 Denier) aufweist; und
   eine Kautschukbeschichtungslage, die auf der Aramidgewebeschicht gebildet ist,
   wobei ein Kraftdehnungsindex (TI$^{wa}$) in einer Kettrichtung des Gewebes in einem Bereich von 2,52 bis 4,32 liegt, wie er gemäß der unten stehenden Gleichung 1 definiert ist, ein Bedeckungsfaktor in einem Bereich von 622,50 $\frac{\sqrt{dtex}}{cm}$ bis 921,29 $\frac{\sqrt{dtex}}{cm}$ (1.500 $\frac{\sqrt{Denier}}{inch}$ bis 2.200 $\frac{\sqrt{Denier}}{inch}$) liegt, wie er gemäß der unten stehenden Gleichung 4 definiert ist, und wobei eine Steifigkeit einen Wert von 14,7 N (1,5 kgf) oder weniger gemäß dem Verfahren ASTM D 4032 der American Society for Testing and Materials aufweist, und
   wobei eine Beschichtungsmenge der Kautschukbeschichtungslage 20 bis 100 g/m$^2$ beträgt:

$$[\text{Gleichung 1}]$$

$$TI^{wa} = T^{wa}/(S^{wa} \times D)$$

   wobei T$^{wa}$ die Zugfestigkeit (N/5 cm) in einer Kettrichtung des Aramidgewebes ist, wobei sie gemäß dem Verfahren ISO 13934-1 der International Organization for Standardization gemessen wird, S$^{wa}$ die Zugdehnung (%) in einer Kettrichtung des Aramidgewebes ist, wie sie durch das Verfahren ISO 13934-1 der International Organization for Standardization gemessen wird, und wobei D die Feinheit (dtex) des Aramidgarns ist, und

$$[\text{Gleichung 4}]$$

$$\text{Bedeckungsfaktor (CF)} =$$

$$Kettfadendichte \quad \times \quad \sqrt{(Kettfadenfeinheit)} \quad + \quad Schussdichte \quad \times \quad \sqrt{(Schussfeinheit)}.$$

2. Airbag nach Anspruch 1, wobei ein Kraftdehnungsindex (TI$^{we}$) des Aramidgewebes in einer Schussrichtung des Gewebes in einem Bereich von 3,06 bis 4,86 liegt, wie es gemäß der unten stehenden Gleichung 2 definiert ist:

$$[\text{Gleichung 2}]$$

$$TI^{we} = T^{we}/(S^{we} \times D)$$

   wobei T$^{we}$ die Zugfestigkeit (N/5 cm) in einer Schussrichtung des Aramidgewebes ist, wobei sie gemäß dem Verfahren ISO 13934-1 der International Organization for Standardization gemessen wird, S$^{we}$ die Zugdehnung (%) in einer Schussrichtung des Aramidgewebes ist, wie sie durch das Verfahren ISO 13934-1 der International Organization for Standardization gemessen wird, und wobei D die Feinheit (dtex) des Aramidgarns ist.

3. Airbag nach Anspruch 1, wobei die Aramidgewebeschicht eine thermische Widerstandskonstante (X) von 6,5 bis 400 aufweist, wie sie gemäß der unten stehenden Gleichung 3 definiert ist:

[Gleichung 3]

$$\text{Thermische Widerstandskonstante } (X) = (T \times t)/(600 \times D'),$$

wobei T eine Temperatur eines heißen Stabes während eines freien Falls auf die Gewebeschicht in einem Bereich von 350 bis 750 °C ist, t eine Größe einer Zeitdauer (sec) ist, die für den heißen Stab zugrunde gelegt wird, um von einem Kontaktpunkt mit der Gewebeschicht aus durch freien Fall durch die Gewebeschicht zu verlaufen, und D' eine Dicke (mm) der Aramidgewebeschicht ist.

4. Airbag nach Anspruch 1, wobei das Aramidgarn der Aramidgewebeschicht eine Kettfadendichte und eine Schussdichte in einem Bereich von 9,84 bis 21,65 Fäden/cm (25 bis 55 Fäden/inch) ist.

5. Airbag nach Anspruch 1, wobei die Aramidgewebeschicht eine Dicke von 0,20 bis 0,50 mm aufweist, wobei sie gemäß dem Verfahren ASTM D 1777 der American Society for Testing and Materials ASTM gemessen wird.

6. Airbag nach Anspruch 1, wobei die Kautschukbeschichtungslage einen auf Silizium basierten Kautschuk oder einen auf Polyurethan basierten Kautschuk umfasst.

7. Airbag nach Anspruch 1, wobei die Kautschukbeschichtungslage gebildet wird, indem ein Beschichtungsprozess mindestens zweimal wiederholt wird.

8. Airbag nach Anspruch 1, wobei das Aramidgewebe eine Kettfadenfeinheit und eine Schussfeinheit aufweist, die einander gleich sind.

9. Airbag nach Anspruch 1, der ein externer Airbag für ein Fahrzeug ist und einen Airbag für Fußgänger oder einen Airbag für Stoßstangen einschließt.

10. Verwendung eines Aramidgewebes, so wie es nach einem der Ansprüche 1 bis 8 definiert ist, in einem Airbag.

**Revendications**

1. Un coussin gonflable pour un véhicule comprenant un tissu d'aramide comprenant:

une couche de tissu d'aramide comprenant un fil d'aramide ayant une finesse de 333,3 à 1111.1 dtex (300 à 1000 deniers); et
une couche de revêtement en caoutchouc formée sur la couche de tissu d'aramide, dans laquelle un indice de résistance à l'allongement ($TI^{wa}$) dans une direction de chaîne du tissu de 2,52 à 4,32, tel que défini par l'équation 1 ci-dessous, un facteur de couverture de $\frac{\sqrt{dtex}}{cm}$ à $\frac{\sqrt{dtex}}{cm}$ (1.500 $\frac{\sqrt{denier}}{pouce}$ à 2.200 $\frac{\sqrt{denier}}{pouce}$), tel que défini par l'équation 4 ci-dessous, une rigidité inférieure ou égale à 14,7 N (1,5 kgf) selon le procédé ASTM D 4032 de la Société américaine pour essais et matériaux, et
une quantité de revêtement du caoutchouc de la couche de revêtement est comprise entre 20 et 100 g / m$^2$ :

[équation 1]

$$TI^{wa} = T^{wa} / (S^{wa} \times D)$$

dans laquelle $T^{wa}$ est la résistance à la traction (N / 5 cm) dans le sens de la chaîne du tissu d'aramide, mesurée selon la méthode ISO 13934-1 de l'Organisation internationale de normalisation, $S^{wa}$ est l'allongement à la traction (%) dans le sens de la chaîne du tissu d'aramide, mesuré selon la méthode ISO 13934-1 de l'Organisation internationale de normalisation, et D est la finesse (dtex) du fil d'aramide, et

[équation 4]

Facteur de couverture (CF) = $densité\ de\ chaîne\ \times \sqrt{finesse\ de\ chaîne} + densité\ de\ trame \times \sqrt{finesse\ de\ trame}$.

2. Le coussin gonflable selon la revendication 1, dans lequel un indice de résistance-allongement (TI^we) dans une direction de trame du tissu est de 3,06 à 4,86, tel que défini par l'équation 2 ci-dessous:

[équation 2]

$TI^{we} = T^{we} / (S^{we} \times D)$

dans laquelle $T^{we}$ est la résistance à la traction (N / 5 cm) dans le sens de la trame du tissu d'aramide, mesurée selon la méthode ISO 13934-1 de l'Organisation internationale de normalisation, $S^{we}$ est l'allongement à la traction (%) dans le sens de la trame du tissu d'aramide, mesuré selon la méthode ISO 13934-1 de l'Organisation internationale de normalisation, et D est la finesse (dtex) du fil d'aramide.

3. Le coussin gonflable selon la revendication 1, dans lequel la couche de tissu d'aramide a une constante de résistance thermique (X) de 6,5 à 400, tel que défini par l'équation 3 ci-dessous:

[équation 3]

constante de résistance thermique (X) = $(T \times t) / (600 \times D')$

dans laquelle T est la température d'une tige chaude pendant la chute libre sur la couche de tissu dans une plage allant de 350 à 750° C, t est la durée (en secondes) nécessaire au passage de la tige chaude à travers la couche de tissu à partir d'un point de contact avec la couche de tissu en chute libre, et D'est une épaisseur (mm) de la couche de tissu aramide.

4. Le coussin gonflable selon la revendication 1, dans lequel le fil d'aramide de la couche de tissu d'aramide a une densité de chaîne et une densité de trame dans la plage de 9,84 à 21,65 fils/cm (25 à 55 th / pouce).

5. Le coussin gonflable selon la revendication 1, dans lequel la couche de tissu d'aramide a une épaisseur de 0,20 à 0,50 mm telle que mesurée par le procédé ASTM D 1777 de la Société américaine pour essais et matériaux.

6. Le coussin gonflable selon la revendication 1, dans lequel la couche de revêtement en caoutchouc comprend un caoutchouc à base de silicium ou un caoutchouc à base de polyuréthane.

7. Le coussin gonflable selon la revendication 1, dans lequel la couche de revêtement en caoutchouc est formée en répétant un processus de revêtement au moins deux fois.

8. Le coussin gonflable selon la revendication 1, dans lequel le tissu d'aramide a une finesse de chaîne et une finesse de trame qui sont identiques.

9. Le coussin gonflable selon la revendication 1, qui est un coussin gonflable externe pour un véhicule, y compris un coussin gonflable pour piétons ou un coussin gonflable de pare-chocs.

10. Utilisation d'un tissu d'aramide tel que défini dans l'une quelconque des revendications 1 à 8 dans un coussin gonflable.

FIG.1

Hot Rod Tester    Heated Rod    Finished Sample

FIG.2

**EP 2 796 600 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090104534 A

- KR 20110077813 A

